# EUROPÄISCHE PATENTSCHRIFT

(11) **EP 4 367 166 B1**
(45) Veröffentlichungstag und Bekanntmachung des Hinweises auf die Patenterteilung: **04.06.2025**
(21) Anmeldenummer: 22732274.0
(22) Anmeldetag: 27.06.2022
(51) Int. Cl.: C08G 81/02, C08L 69/00

(54) **ZUSAMMENSETZUNG UND VERFAHREN ZUR HERSTELLUNG EINER TRANSPARENTEN THERMOPLASTISCHEN POLYCARBONAT/POLYMETHYLMETHACRYLAT-FORMMASSE**
COMPOSITION AND METHOD FOR THE PREPARATION OF A TRANSPARENT THERMOPLASTIC POLYCARBONATE/POLYMETHYLMETHACRYLATE MOULDING COMPOSITION
COMPOSITION ET PROCÉDÉ DE FABRICATION D'UNE MATIÈRE DE MOULAGE THERMOPLASTIQUE TRANSPARENTE DE POLYCARBONATE/POLYMÉTHYLMÉTHACRYLATE

(30) Priorität: 05.07.2021 EP 21183774
(43) Veröffentlichungstag der Anmeldung: 15.05.2024
(73) Patentinhaber: Covestro Deutschland AG, 51373 Leverkusen (DE)
(72) Erfinder: SEIDEL, Andreas, 41542 Dormagen (DE); BUBMANN, Tobias, 95444 Bayreuth (DE); HEIJL, Jan, 9940 Evergem (BE); REITHMEIER, Marina, 51069 Köln (DE); ALTSTÄDT, Volker, 20099 Hamburg (DE)
(74) Vertreter: Levpat
(86) Internationale Anmeldenummer: PCT/EP2022/067474
(87) Internationale Veröffentlichungsnummer: WO 2023/280608

(56) Entgegenhaltungen:
- WO-A1-2016/189494
- US-A- 4 959 411

## Beschreibung

Die vorliegende Erfindung betrifft eine Polycarbonat/Polymethylmethacrylat-Zusammensetzung zur Herstellung einer thermoplastischen Polycarbonat/Polymethylmethacrylat-Formmasse, ein Verfahren zur Herstellung der Formmasse, die Formmasse selbst, die Verwendung der Formmasse zur Herstellung von Formkörpern, die Formkörper enthaltend eine solche Formmasse sowie ein Verfahren zur Herstellung von Formkörpern.

Nicht zuletzt getrieben durch die Entwicklung der LED-Lichtquellen-Technologie und sich daraus ergebender neuer Beleuchtungs- und Funktionsintegrationskonzepte haben transparente und transluzente thermoplastische Formmassen, welche sich zur Herstellung von mittels sichtbarem Licht durchleuchtbaren Formkörpern eignen, in vielen Anwendungsbereichen, beispielsweise im Automobilbereich, im Bausektor und im Elektronikbereich, in den letzten Jahren zunehmend an Bedeutung gewonnen.

Das Eigenschaftsprofil traditioneller transparenter thermoplastischer Polymer-Werkstoffe wie Polycarbonat (PC) und Polymethylmethacrylat (PMMA) stößt bei vielen dieser neuen Anwendungen zunehmend auf technische Grenzen. Beispielsweise wird bei durchleuchtbaren Bauteilen im Automobilinnenraum wie beispielsweise Instrumententafelträgern oder Zierblenden oder in automobilen Karosserieanwendungen, welche beispielsweise einer ambienten Beleuchtung oder bedarfsgerecht schaltbaren Funktionsanzeige dienen sollen, oft eine gegenüber PMMA verbesserte Materialduktilität sowie eine gegenüber PC verbesserte Kratzfestigkeit oder Chemikalienbeständigkeit gefordert. Für den Fachmann ist es insofern naheliegend, sich der Polymerblend-Technologie zu bedienen, um die individuellen Vorteile dieser beiden Werkstoffe (einerseits hohe Kratzfestigkeit und gute Chemikalienbeständigkeit von PMMA sowie hohe Duktilität von PC andererseits) miteinander zu kombinieren.

Die Eigenschaften solcher PC/PMMA-Blend-Formmassen und der daraus hergestellten Formkörper lassen sich durch geeignete Wahl ihrer Zusammensetzung und Herstellbedingungen in weiten Bereichen variieren und an die Anforderungen der jeweiligen Anwendung anpassen. Dadurch lassen sich Formmassen mit einer Vielzahl von Eigenschaftsprofilen realisieren, die im Wesentlichen oft zwischen denen von reinem PC und denen von reinem PMMA liegen.

Dieses gilt jedoch grundsätzlich nicht für die Lichttransmission (Transparenz). Da PC- und PMMA-Schmelzen nicht vollständig mischbar sind, bilden sich bei der Compoundierung von PC/PMMA-Blends in der Regel zweiphasige Morphologien aus, in denen das Polymer, welches im Überschuss eingesetzt wird, die Matrixphase bildet, in der das jeweils andere Polymer relativ fein verteilt und dadurch mit einer Vielzahl von mikroskopischen Phasengrenzflächen vorliegt. An diesen PC-PMMA-Phasengrenzflächen wird eingestrahltes Licht aufgrund der unterschiedlichen Brechungsindizes der beiden Polymere gestreut. Das Ergebnis ist eine hohe Opazität (das heißt sehr geringe Lichttransmission) der PC/PMMA-Blends verglichen mit den beiden polymeren Blendpartnern.

Weiterhin können die Phasengrenzflächen hinsichtlich mechanischer Belastungen Schwachpunkte darstellen. Diese Phasengrenzflächen können etwa zu einem spröden Bruchversagen unter (multiaxialer) Schlageinwirkungen und/oder zum Bruchversagen bei von außen auf den Formkörper wirkenden Spannungen führen, insbesondere, wenn der Formkörper in Kontakt mit gewissen Chemikalien/Medien wie beispielsweise Fetten oder Ölen steht, welche Bestandteile von Lebensmitteln, Schmierstoffen oder kosmetischen Produkten (wie beispielsweise Hand- oder Sonnencremes) sind.

Eine bisher unzureichend gelöste technische Herausforderung in der Werkstoffentwicklung bestand somit in der Bereitstellung von PC/PMMA-Blends, die sich über ein thermoplastisches Umformverfahren zur Herstellung von transparenten oder transluzenten (d.h. durchleuchtbaren) Formkörpern eignen und eine vorteilhafte Kombination aus Kratzfestigkeit, Duktilität und Spannungsrissbeständigkeit unter Chemikalieneinfluss aufweisen.

Verschiedene wissenschaftliche Publikationen und Patentdokumente offenbaren, dass durch Blockcopolymere, die in-situ in einer Reaktivextrusion gebildet werden können, transparente PC/PMMA-Blends darstellbar sind.

WO 2020/212229 A1 offenbart ein Reaktivcompoundierungsverfahren zur Herstellung einer thermoplastischen Formmasse unter Einsatz von aromatischem Polycarbonat und einem weiteren Polymer, welches mindestens eine Art funktioneller Gruppen ausgewählt aus Ester-, Epoxy-, Hydroxy-, Carboxy- und Carbonsäureanhydrid-Gruppen enthält, wobei als Katalysator ein spezielles Phosphoniumsalz eingesetzt wird. Die Anmeldung offenbart insbesondere auch die Herstellung transparenter thermoplastischer PC/PMMA-Formmassen in einem solchen Verfahren.

WO 2016/138246 A1 offenbart transparente PC/PMMA-Blends enthaltend 9,9 bis 40 Gew.-% Polycarbonat und 59,9 bis 90 Gew.-% PMMA, welche in einer Schmelzextrusion unter Einsatz von 0,0025 bis 0,1 Gew.-% eines Zinn-Katalysators hergestellt werden.

WO 2016/189494 A1 offenbart transparente PC/PMMA-Blends enthaltend 80 bis 95 Gew.-% eines speziell spezifizierten verzweigten Polycarbonats mit einem End-Cap-Gehalt von 45% bis 80% und 4,9 bis 20 Gew.-% PMMA, welche in einer Schmelzextrusion durch Umesterung unter Einsatz von 0,1 bis 1,5 Gew.-% eines Katalysators, bevorzugt ausgewählt aus Zn-, Sn- und Ag-Verbindungen, hergestellt werden.

A.K. Singh, et al. "Reactive Compatibilization of Polycarbonate and Poly(methyl)methacrylate in the Presence of a Novel Transesterification Catalyst SnCl2·2H2O", J. Phys. Chem. B 2011, 115, 1601-1607 offenbart transparente PC/PMMA-Formmassen hergestellt in einem Reaktivextrusionsverfahren unter Verwendung von SnCl₂·2H₂O als Katalysator.

A.K. Singh, et al. "Evidence for in situ graft copolymer formation and compatibilization of PC and PMMA during reactive extrusion processing in the presence of the novel organometallic transesterification catalyst tin(II) 2-ethylhexanoate", RSC Advances, 2012, 2, 10316-10323 offenbart transluzente PC/PMMA-Formmassen hergestellt in einem Reaktivextrusionsverfahren unter Verwendung von Zinn(II)-2-ethylhexanoat als Katalysator.

T. Bubmann et al. "Transparent PC/PMMA Blends Via Reactive Compatibilization in a Twin-Screw Extruder" Polymers 2019, 11, 2070 offenbart, dass solche PC+PMMA-Formmassen hergestellt in Reaktivextrusionsverfahren gemäß dem zuvor zitierten Stand der Technik bedingt durch eine interpolymere Umesterungsreaktion und somit Bildung von PC-g-PMMA-Pfropfpolymeren während der Reaktivextrusion zwar transparent sind, jedoch für jegliche industrielle Anwendung unzureichende Materialduktilität aufweisen. Als Grund hierfür wird die mit der Umesterung einhergehende Molekulargewichtsreduktion des Polycarbonats aufgezeigt, welche maßgeblich auch zur Ausbildung der Transparenz in den derartig hergestellten Blends beiträgt, da sich die Mischbarkeit von PC und PMMA mit abnehmendem PC-Molekulargewicht verbessert und dadurch in den reaktivextrudierten Blends einphasige Phasenmorphologien resultieren.

Die PC/PMMA-Blends des Standes der Technik weisen für einige Anwendungsbereiche eine noch unzureichende Lichttransmission und/oder eine nicht ausreichend über den gesamten Wellenlängenbereich des sichtbaren Lichtes konstante Lichttransmission auf.

US 4,959,411 offenbart ein Verfahren zur Herstellung eines Blockcopolymers durch Reaktion in organischer Lösung oder in einer Schmelzecompoundierung eines Epoxy-funktionalisierten Olefin-Polymers mit einem Carboxy-funktionalisierten Polycarbonats sowie die Verwendung eines solchen Copolymers zur Kompatibilisierung von Polymerblends aus Polycarbonat und Polyolefin mit dem Ziel der Reduktion ihrer Neigung zur Delamination. Die Herstellung von Copolymeren aus Polycarbonat und Polymethylmethacrylat sowie transparente PC/PMMA-Formmassen mit dem angestrebten Profil mechanischer Eigenschaften werden nicht offenbart.

Es war daher wünschenswert, eine Zusammensetzung zur Erzeugung einer transparenten oder transluzenten (d.h. mit Licht im sichtbaren Wellenlängenbereich durchleuchtbaren), thermoplastischen Polymethylmethacrylat-enthaltenden Polycarbonat-Formmasse mit verbesserter Lichttransmission, bevorzugt mit einer über den gesamten Wellenlängenbereich sichtbaren Lichtes weitgehend konstanten Lichttransmission, bereitzustellen, wobei sich aus der Formmasse durchleuchtbare Formkörper mit einer gegenüber Polycarbonat verbesserten Kratzfestigkeit herstellen lassen, welche sich zur Herstellung von Bauteilen zur Verwendung insbesondere in Lichtleitertechnik- und Beleuchtungsanwendungen eignen.

Es war weiterhin wünschenswert, dass diese Zusammensetzungen eine gegenüber PC/PMMA-Formmassen des Standes der Technik, idealerweise auch gegenüber reinem Polycarbonat verbesserte Spannungsrissbeständigkeit unter Chemikalieneinfluss aufweisen.

Weiterhin war es wünschenswert, dass diese Zusammensetzungen eine gute, bevorzugt eine gegenüber durchleuchtbaren PC/PMMA-Formmassen des Standes der Technik verbesserte Duktilität aufweisen.

Weiterhin war die Bereitstellung eines Verfahrens wünschenswert, welches sich zur Herstellung solcher Formmassen eignet und bevorzugt in handelsüblichen und industriell etablierten Compoundierungsaggregaten wie beispielsweise Einwellenextrudern, gleichläufigen oder gegenläufigen Doppelwellenextrudern, Planetwalzenextrudern, Innenknetern oder Ko-Knetern durchgeführt werden kann.

Weiterhin war es wünschenswert, ein einfaches Verfahren zur Herstellung von PC/PMMA-Formkörpern mit dem beschriebenen Eigenschaftsprofil bereitzustellen.

Unter einem durchleuchtbaren Formkörper wird im Rahmen der vorliegenden Anmeldung ein solcher Formkörper verstanden, der an mindestens einer Stelle eine Transmission Y(D65, 10°) gemessen und berechnet gemäß DIN 5033-7 in der Version 2014-10 bzw. gemäß DIN EN ISO 11664-3 in der Version 2013-08 von mindestens 35%, bevorzugt mindestens 50% weiter bevorzugt mindestens 65%, am meisten bevorzugt mindestens 75% aufweist.

Unter einem bevorzugten durchleuchtbaren Formkörper mit einer über den gesamten Wellenlängenbereich sichtbaren Lichtes weitgehend konstanten Transmission wird im Rahmen der vorliegenden Anmeldung ein solcher Formkörper verstanden, für den an mindestens einer Stelle der Betrag der Differenz der örtlichen wellenlängenspezifischen totalen Transmissionsgrade, welche bei Wellenlängen von 700 nm (T₇₀₀) und 400 nm (T₄₀₀) gemessen wurden, maximal 70%, bevorzugt maximal 50%, besonders bevorzugt maximal 30% des Wertes der örtlichen Transmission Y(D65, 10°) beträgt.

Die entsprechenden wellenlängenabhängigen totalen Transmissionsgrade werden dabei nach DIN 5033-7 in der Version 2014-10 bestimmt. Daraus wird nach DIN EN ISO 11664-3 in der Version 2013-08 mit der Lichtart D65 und dem 10°-Beobachter der Wert Y(D65, 10°) berechnet. Im Folgenden wird dieser Wert Y(D65, 10°) als "Transmission" bezeichnet.

Die aus der Formmasse hergestellten durchleuchtbaren Formkörper sollen eine gegenüber reinem Polycarbonat verbesserte Kratzfestigkeit, beurteilt anhand der Bleistifthärte, welche in Anlehnung an das Verfahren von Wolff-Wilborn ermittelt wird, aufweisen. Reines Polycarbonat weist eine Bleistifthärte von F in diesem Testverfahren auf, das heißt, dass die erfindungsgemäßen Formkörper mindestens eine Bleistifthärte von H, bevorzugt von mindestens 2H, besonders bevorzugt von mindestens 3H aufweisen sollen.

Die hergestellten Formkörper sollen bevorzugt eine gegenüber reinem Polycarbonat verbesserte Kratzfestigkeit und eine gegenüber reinem Polycarbonat und/oder PC/PMMA-Zusammensetzungen gemäß dem Stand der Technik verbesserte Beständigkeit gegenüber Fetten und Ölen und/oder Fette und/oder Öle enthaltende Zusammensetzungen wie beispielswiese Kosmetika, Handcremes und Sonnenmilch aufweisen.

Überraschend wurde nun gefunden, dass thermoplastische Formmassen, welche erhalten werden durch Schmelzecompoundierung einer Zusammensetzung enthaltend
A) ein Carboxy-Gruppen enthaltendes aromatisches Polycarbonat und/oder aromatisches Polyestercarbonat, wobei das Polcarbonat eine Säurezahl im Bereich von 0,5 bis 10 mg Kaliumhydroxid (KOH)/g, bestimmt in Dichlormethan (DCM)/Ethanol als Lösungsmittel mittels potenziometrischer Titration gemäß DIN EN ISO 2114, Methode A in der Version 2002-6 mit ethanolischer KOH-Lösung bei Raumtemperatur, und ein gewichtsgemitteltes Molekulargewicht M_{w}, ermittelt per Gelpermeationschromatographie bei Raumtemperatur in Dichlormethan als Lösungsmittel mit einem BPA-Polycarbonat-Standard, im Bereich von 10.000 bis 40.000 g/mol aufweist und
B) ein Polymethylmethacrylat-Copolymer enthaltend Struktureinheiten abgeleitet von Glycidylmethacrylat, wobei das Copolymer ein Epoxid-Äquivalent, bestimmt in Dichlormethan als Lösungsmittel bei Raumtemperatur gemäß DIN EN 1877-1 in der Version 2000-12, von 0,05 bis 3 Gew.-% und ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20.000 bis 200.000 g/mol aufweist,

wobei das Gewichtsverhältnis der Komponenten A und Komponente B im Bereich von 95:5 bis 35:65 liegt,
die angestrebten Eigenschaften aufweisen.

Im Rahmen dieser Anmeldung werden die Begrifflichkeiten "Carboxy" und "Carboxyl" synonym verwendet und stehen für COOH-Gruppen.

In bevorzugter Ausführungsform werden Natur und Mengen der Komponenten A und B so gewählt, dass das Verhältnis aus (i) dem Produkt aus Säurezahl der Komponente A (in mg KOH/g) und dem Gew.-Anteil an Komponente A, bezogen auf in Summe 100 Gew.-Teile der Komponenten A und B, und (ii) dem Produkt aus Epoxid-Äquivalent der Komponente B (in Gew.-%) und dem Gew.-Anteil an Komponente B, bezogen auf in Summe 100 Gew.-Teile der Komponenten A und B, bei mindestens 15, weiter bevorzugt bei mindestens 20, besonders bevorzugt bei mindestens 25 und am meisten bevorzugt bei mindestens 30 liegt.

Das Verhältnis aus (i) dem Produkt aus Säurezahl der Komponente A (in mg KOH/g) und dem Gew.-Anteil an Komponente A, bezogen auf in Summe 100 Gew.-Teile der Komponenten A und B, und (ii) dem Produkt aus Epoxid-Äquivalent der Komponente B (in Gew.-%) und dem Gew.-Anteil an Komponente B, bezogen auf in Summe 100 Gew.-Teile der Komponenten A und B, liegt bevorzugt bei maximal 200, besonders bevorzugt bei maximal 100 und am meisten bevorzugt bei maximal 50.

Das Verhältnis aus (i) dem Produkt aus Säurezahl der Komponente A (in mg KOH/g) und dem Gew.-Anteil an Komponente A, bezogen auf in Summe 100 Gew.-Teile der Komponenten A und B, und (ii) dem Produkt aus Epoxid-Äquivalent der Komponente B (in Gew.-%) und dem Gew.-Anteil an Komponente B, bezogen auf in Summe 100 Gew.-Teile der Komponenten A und B, liegt bevorzugt im Bereich von 15 bis 200, besonders bevorzugt im Bereich von 20 bis 100, weiter bevorzugt im Bereich 25 bis 100 und am meisten bevorzugt im Bereich von 25 bis 50.

Bei der Schmelzecompoundierung wird mindestens ein Teil der Komponente A mit mindestens einem Teil der Komponente B unter Ausbildung eines Copolymers enthaltend Blöcke aus den Komponenten A und B in einer chemischen Reaktion aneinander kovalent gekoppelt.

In bevorzugter Ausführungsform liegt das Gewichtsverhältnis der Komponenten A und B im Bereich von 90:10 bis 60:40, besonders bevorzugt im Bereich von 85:15 bis 75:25.

In bevorzugter Ausführungsform enthalten die Zusammensetzungen die Komponenten A und B in Summe in einer Menge von mindestens 75 Gew.-%, weiter bevorzugt von mindestens 90 Gew.-%, besonders bevorzugt von mindestens 95 Gew.-% und am meisten bevorzugt von mindestens 99 Gew.-%.

Bevorzugt sind weiterhin Zusammensetzungen, welche aus Komponenten A und B bestehen. In weiter bevorzugter Ausführungsform bestehen derartige Zusammensetzungen aus
35 bis 95 Gew.-%, weiter bevorzugt 60 bis 90 Gew.-%, am meisten bevorzugt 75 bis 85 Gew.-% der Komponente A und
5 bis 65 Gew.-%, weiter bevorzugt 10 bis 40 Gew.-%, am meisten bevorzugt 25 bis 30 Gew.-% der Komponente B.

Die Zusammensetzung können zusätzlich zu den Komponenten A und B als Komponente C ein oder mehrere Polymeradditive, Prozesshilfsstoffe und/oder von den Komponenten A und B verschiedene Polymere enthalten, unter der Maßgabe, dass diese hinsichtlich ihrer Art und Einsatzmenge der Lösung der Aufgabe nicht entgegenstehen.

Diese Komponente C kommt in einer Menge von bevorzugt bis zu 25 Gew.-%, weiter bevorzugt bis zu 10 Gew.-%, besonders bevorzugt bis zu 5 Gew.-% und am meisten bevorzugt bis zu 1 Gew.-% in den Zusammensetzungen zum Einsatz.

Derartige, Komponente C enthaltende Zusammensetzungen bestehen bevorzugt aus
35 bis 95 Gew.-%, besonders bevorzugt 60 bis 90 Gew.-%, am meisten bevorzugt 75 bis 85 Gew.-% der Komponente A,
4,99 bis 64,99 Gew.-%, besonders bevorzugt 9,98 bis 39,98 Gew.-%, am meisten bevorzugt 14,9 bis 24,9 Gew.-% der Komponente B,
0,01 bis 10 Gew.-%, besonders bevorzugt 0,02 bis 5 Gew.-%, am meisten bevorzugt 0,1 bis 1 Gew.-% der Komponente C,
wobei die Gew.-% der Komponenten A bis C so gewählt sind, dass sie sich zu 100 Gew.-% summieren.

### Komponente A

Als Komponente A kommt ein aromatisches Polycarbonat und/oder ein aromatisches Polyestercarbonat zum Einsatz. Es können auch Mischungen von mehreren aromatischen Polycarbonaten und/oder Polyestercarbonaten eingesetzt werden.

Das Polycarbonat und/oder Polyestercarbonat gemäß Komponente A enthält Carboxy (COOH)-Gruppen, in bevorzugter Ausführungsform terminale COOH-Gruppen. In besonders bevorzugter Ausführungsform sind die COOH-Gruppen in Komponente A ausschließlich terminaler Natur.

Das Polycarbonat und/oder Polyestercarbonat gemäß Komponente A weist eine Säurezahl im Bereich von 0,5 bis 10 mg Kaliumhydroxid (KOH)/g auf. In bevorzugter Ausführungsform beträgt die Säurezahl der Komponente A 1 bis 7 mg KOH/g, besonders bevorzugt 1,3 bis 5,0 mg KOH/g, am meisten bevorzugt 1,5 bis 3,5 mg KOH/g.

Die Säurezahl wird bestimmt in Dichlormethan (DCM)/Ethanol als Lösungsmittel gemäß DIN EN ISO 2114, Methode A in der Version 2002-6 mittels potenziometrischer Titration mit ethanolischer KOH-Lösung bei Raumtemperatur. Das zu untersuchende Polymer wird dazu in einer Konzentration von 10 g/L in 50 ml Dichlormethan bei Raumtemperatur gelöst. Vor der potentiometischen Titration mit 0,1 N ethanolischer KOH werden der Probenlösung 5 ml Ethanol zugegeben.

Das Polycarbonat und/oder Polyestercarbonat gemäß Komponente A weist ein gewichtsgemitteltes Molekulargewicht M_{w}, gemessen durch GPC (Gelpermeationschromatographie) bei Raumtemperatur in Methlylenchlorid mit BPA-Polycarbonat-Standard), von 10.000 bis 40000 g/mol, bevorzugt von 15.000 bis 35.000 g/mol, besonders bevorzugt von 20.000 bis 30.000 g/mol auf.

Kommt als Komponente A eine Mischung mehrerer Polycarbonate mit unterschiedlicher individueller Säurezahl und/oder unterschiedlichem individuellen gewichtsgemittelten Molekulargewicht M_{w} zum Einsatz, so gilt, dass diese Mischung eine Säurezahl bzw. ein gewichtsgemitteltes Molekulargewicht M_{w} in einem der oben genannten Bereiche aufweist.

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer Polycarbonate gemäß Komponente erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, bevorzugt unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist grundsätzlich auch eine Herstellung über ein Schmelzepolymerisationsverfahren durch Umsetzung von Diphenolen mit beispielsweise Diphenylcarbonat in Anwesenheit eines Umesterungskatalysators möglich.

Das Phasengrenzflächenpolymerisationsverfahren ist zur Herstellung der COOH-Gruppen enthaltenden Polycarbonate gemäß der erfindungsgemäßen Komponente A besonders geeignet.

Ein bevorzugtes Verfahren zur Herstellung von terminalen COOH-Gruppen enthaltenden Polycarbonaten gemäß Komponente A ist in US 4,853,458 B beschrieben. Dabei werden Carbonsäure-Gruppen oder Carbonsäuregruppen-Derivate wie beispielweise Ester-, Anhydrid- oder Amid-Gruppen enthaltende Monophenole als Kettenabbrecher in einem Phasengrenzflächenpolymerisationsverfahren eingesetzt. Nach der Polymerisation erfolgt eine Freisetzung der COOH Gruppen wie unten beschrieben. Das Molekulargewicht der so hergestellten Polycarbonate kann dabei durch Variation des Verhältnisses der monophenolischen Kettenabbrecher zu Diphenolen in weiten Bereichen zielgenau eingestellt werden. Bevorzugt als Carbonsäure-Gruppen oder Carbonsäuregruppen-Derivate enthaltende Kettenabbrecher zum Einsatz kommen dabei Alkyl-, Aryl- oder Alkylaryl-Ester der 4-Hydroxybenzoesäure. Besonders bevorzugt kommen Alkyl-Ester der 4-Hydroxybenzoesäure, weiter bevorzugt der tert-Butyl-Ester der 4-Hydroxybenzoesäure, also tert-Butyl-4-Hydroxybenzoat als Kettenabbrecher zum Einsatz. Die Carbonsäure-Gruppen oder Carbonsäuregruppen-Derivate enthaltenden Kettenabbrecher können auch als Mischung mit anderen monophenolischen Kettenabbrechern, die keine Carbonsäure-Gruppen oder Carbonsäuregruppen-Derivate enthalten, also als Kettenabbrechermischung eingesetzt werden. Durch das Verhältnis der Carbonsäure-Gruppen oder Carbonsäuregruppen-Derivate enthaltenden zu Carbonsäure-Gruppen oder Carbonsäuregruppen-Derivate nicht enthaltenden Kettenabbrecher-Molekülen sowie durch die Bedingungen bei der anschließenden Freisetzung der COOH Gruppen lässt sich der Gehalt an COOH-Gruppen in der Komponente A über breite Bereiche zielgesteuert einstellen.

Für die Herstellung der aromatischen Polycarbonate im Phasengrenzflächenverfahren geeignete Kettenabbrecher, die keine Carbonsäure-Gruppen oder Carbonsäuregruppen-Derivate enthalten, sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol geeignet. Bevorzugt sind dabei als solche Kettenabbrecher Phenol oder p-tert.-Butylphenol, am meisten bevorzugt ist p-tert.-Butylphenol.

Weiter bevorzugt werden bei der Herstellung der Polycarbonate diese Kettenabbrecher, die keine Carbonsäure-Gruppen oder Carbonsäuregruppen-Derivate enthalten, in einem molaren Anteil bezogen auf in Summe 100 mol-% aller Kettenabbrecher, von 20 bis 90 mol-%, besonders bevorzugt 40 bis 85 mol-%, weiter bevorzugt 45 bis 80 mol-%, besonders bevorzugt 50 bis 75 mol-% eingesetzt.

Aus den Polycarbonaten mit 4-Hydroxybenzoesäureester-Endgruppen können die terminalen COOH-Gruppen (d.h. 4-Hydroxybenzoesäure-Endgruppen) beispielsweise durch Endgruppenpyrolyse oder durch sauer katalysierte Esterspaltung gewonnen werden. Bei der bevorzugten Verwendung von tert-Butyl-4-Hydroxybenzoat als Kettenabbrecher lassen sich die COOH-Endgruppen aus den tert-Butyl-4-Hydroxybenzoat-Endgruppen im Polycarbonat besonders einfach durch thermische Eliminierung von Isobutylen bei Temperaturen oberhalb von 200°C, bevorzugt im Bereich von 230 bis 275°C, weiter bevorzugt im Bereich von 230 bis 260°C, besonders bevorzugt im Bereich von 230 bis 255°C thermisch freisetzen, ohne dabei das Polycarbonat-Rückgrat maßgeblich zu degenerieren. Durch die Variation insbesondere der Temperatur bei dieser Endgruppenpyrolyse lässt sich der Anteil der COOH-Endgruppen und auch das Verhältnis zu unerwünschten Nebenprodukten steuern.

Diphenole zur Herstellung der aromatischen Polycarbonate und/oder aromatischen Polyestercarbonate sind vorzugsweise solche der Formel (1) 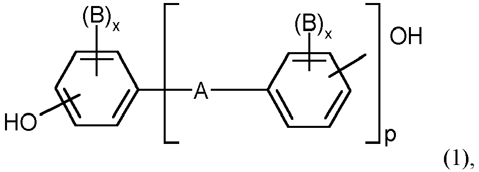 wobei
A eine Einfachbindung, C₁ bis C₅-Alkylen, C₂ bis C₅-Alkyliden, C₅ bis C₆-Cycloalkyliden, -O-, - SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (2) oder (3) 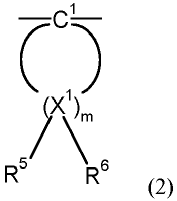 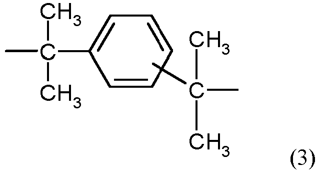
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

In bevorzugter Ausführungsform beträgt der Anteil von Bisphenol-A, bezogen auf die Summe aller zur Herstellung der Komponente A verwendeten Diphenole, mindestens 50 mol-%, besonders bevorzugt mindestens 75 mol-%, am meisten bevorzugt mindestens 95 mol-%. Am stärksten bevorzugt wird bei der Herstellung der Komponente A ausschließlich Bisphenol-A als Diphenol eingesetzt.

Die aromatischen Polycarbonate können in bekannter Weise verzweigt sein, und zwar vorzugsweise durch den Einbau von 0,01 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Bevorzugt werden lineare aromatische Polycarbonate, weiter bevorzugt lineare aromatische Polycarbonate auf Basis von Bisphenol-A, besonders bevorzugt ausschließlich auf Basis von Bisphenol-A eingesetzt.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Bei der Herstellung von aromatischen Polyestercarbonaten kann zusätzlich eine oder mehrere aromatische Hydroxycarbonsäuren eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 2,0 Mol% bezogen auf die eingesetzten Dicarbonsäuredichloride oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihy-droxyphenyl)-propan, Tetra-(4-[4-hydroxphenyl-isopropyl]-phenoxy)-methan, 1,4-Bis[4,4'-dihydroxytri-phenyl)-methyl]-benzol, in Mengen von 0,01 bis 2,0 Mol% bezogen auf die eingesetzten Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Am meisten bevorzugt werden als Komponente A ausschließlich lineare aromatische Polycarbonate, bevorzugt auf Basis von Bisphenol-A, besonders bevorzugt ausschließlich auf Basis von Bisphenol-A eingesetzt.

### Komponente B

Bei der Komponente B handelt es sich um ein Polymethylmethacrylat-Copolymer enthaltend Struktureinheiten abgeleitet von Glycidylmethacrylat.

Bei Komponente B kann es sich auch um eine Mischung mehrerer Polymethylmethacrylat-Copolymere handeln. Diese Polymethylmethacrylat-Copolymer können auch Anteile von Polymethylmethacrylat-Polymermolekülen enthalten, die selbst keine von Glycidylmethacrylat abgeleiteten Struktureinheiten enthalten. Dieses ist insbesondere bei kleinen Glycidylmethacrylatgehalten im Polymethylmethacrylat-Copolymer herstellungsbedingt im Allgemeinen unvermeidlich.

Die Polymethylmethacrylat-Copolymere gemäß Komponente B weisen Epoxid-Äquivalente, bestimmt in Dichlormethan als Lösungsmittel bei Raumtemperatur gemäß DIN EN 1877-1 in der Version 2000-12, von 0,05 bis 3 Gew.-%, bevorzugt von 0,1 bis 1,5 Gew.-%, besonders bevorzugt von 0,13 bis 0,60 Gew.-%, am meisten bevorzugt von 0,15 bis 0,45 Gew.-% auf.

Die Polymethylmethacrylat-Copolymere gemäß Komponente B weisen ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20.000 bis 200.000 g/mol, bevorzugt von 30.000 und 150.0000 g/mol, besonders bevorzugt 50.000 bis 100.000 g/mol auf.

Sofern es sich bei Komponente B um eine Mischung mehrere Polymethylmethacrylat-Copolymere handelt, so gelten die zuvor genannten (Vorzugs)Bereiche für den Epoxid-Gehalt und die gewichtsgemittelten Molekulargewichte M_{w} sowie alle im Folgenden beschriebenen (Vorzugs)Bereiche für die entsprechende Mischung der Polymethylmethacrylat-Copolymere gemäß Komponente B.

Der Ausdruck "Copolymer enthaltend Struktureinheiten abgeleitet von" bedeutet, dass das Copolymer aus den genannten Monomeren durch Copolymerisation hergestellt wird.

Komponente B enthält bevorzugt 0,2 bis 10 Gew.-%, weiter bevorzugt 0,3 bis 5 Gew.-%, besonders bevorzugt 0,4 bis 2 Gew.-%, am meisten bevorzugt 0,5 bis 1,5 Gew.-% an von Glycidylmethacrylat abgeleiteten Struktureinheiten.

Diese Copolymere werden bevorzugt durch Polymerisation von Methylmethacrylat in Anwesenheit von 0,2 bis 10 Gew.-%, weiter bevorzugt 0,3 bis 5 Gew.-%, besonders bevorzugt 0,4 bis 2 Gew.-%, am meisten bevorzugt 0,5 bis 1,5 Gew.-% Glycidylmethacrylat hergestellt.

Die Copolymere gemäß Komponente B können bis zu 50 Gew.-%, bevorzugt bis zu 25 Gew.-%, besonders bevorzugt bis zu 10 Gew.-% von weiteren copolymerisierbaren vinylischen, bevorzugt acrylischen (d.h. Acrylgruppen enthaltende) Monomeren abgeleitete Struktureinheiten enthalten. Als copolymerisierbare acrylische Monomere kommen beispielsweise in Frage Methylacrylat, Ethylacrylat, Propylacrylat, Butylacrylat, Hexylacrylat, 2-Ethylhexylacrylat, Butylmethacrylat und andere, zu diesen genannten Acrylaten strukturverwandte Verbindungen.

Die in diesem Abschnitt über Komponente B angegebenen Gew.-% beziehen sich jeweils auf die Komponente B.

In am stärksten bevorzugter Ausführungsform enthält Komponente B keine von weiteren copolymerisierbaren vinylischen Monomeren abgeleiteten Struktureinheiten.

Die Copolymere gemäß Komponente B sind thermoplastisch.

Die Herstellung der Copolymere gemäß Komponente B enthaltend Struktureinheiten abgeleitet von Methylmethacrylat und Glycidylmethacrylat ist dem Fachmann bekannt und erfolgt bevorzugt durch radikalisch initiierte Polymerisation der entsprechenden Monomere, insbesondere durch Emulsions-, Suspensions-, Lösungs- oder Massepolymerisation.

Bei der Lösungspolymerisation, welche bevorzugt in aprotischen Lösungsmitteln, beispielsweise optional halogensubstituierten aliphatischen oder aromatischen Kohlenwasserstoffen als Lösungsmittel ausgeführt wird, sind bevorzugt solche Bedingungen einzuhalten, die eine Hydrolyse der Epoxidgruppen zumindest weitgehend vermeiden. Geeignete und bevorzugte Bedingungen hierfür sind beispielsweise niedrige Gehalte an protischen Lösungsmitteln wie Wasser, Alkoholen, Säuren oder Basen und Arbeiten in Lösungsmitteln aus der Gruppe der organischen Kohlenwasserstoffe, die gegenüber Epoxidgruppen inert sind, wie z.B. Toluol, Ethylbenzol, Xylol, hochsiedende Aliphaten, chlorierte aromatische Kohlewasserstoffe wie Mono-, Di- Tri- oder Tetrachlorbenzole, chlorierte aliphatische Kohlenwasserstoffe wie Dichlormethan oder Chloroform, Ketone wie Methylethylketon, Ester oder Ether.

Durch Zusatz von Reglern, vor allem von Schwefelreglern, insbesondere von Mercaptanen, können die Molekulargewichte der Komponente B bei der radikalischen Polymerisation so eingestellt werden, dass das erfindungsgemäße gewichtsgemittelte Molekulargewicht M_{w} resultiert.

### Komponente C

Als Komponente C können eine oder mehrere Polymeradditive, Prozesshilfsstoffe und/oder weitere polymere Komponenten verschieden von Komponenten A und B in der Zusammensetzung enthalten sein, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Schlagzähigkeitsmodifikatoren (sowohl mit als auch ohne Kern-Schale-Struktur), polymere Blendpartnern, Katalysatoren, Füll- und Verstärkungsstoffen sowie Farbstoffen und Pigmenten.

Die Auswahl von Art und Menge der Komponente C erfolgt so, dass Einflüsse auf mechanische Eigenschaften und Transparenz der aus den Formmassen hergestellten Formkörpern möglichst gering sind, das heißt so, dass der Zusatz der Komponente C der Lösung der erfindungsgemäßen Aufgabe nicht entgegensteht.

Wenn die Komponente C eingesetzt wird, so wird diese in einem Anteil von maximal 25 Gew.-%, bezogen auf die Zusammensetzung, eingesetzt. Dieser Anteil ist dann die Summe aller als Komponente C eingesetzten Polymeradditive, Prozesshilfsstoffe und polymeren Komponenten verschieden von Komponenten A und B.

Dabei werden Antidrippingmittel, Flammschutzsynergisten, Rauchinhibitoren, Gleit- und Entformungsmittel, Nukleiermittel, nichtpolymere Antistatika, Leitfähigkeitsadditive und Stabilisatoren bevorzugt jeweils in einem Anteil von bis zu 1 Gew.-%, besonders bevorzugt in einem Anteil von 0,05 bis 1 Gew.-% und in Summe bevorzugt in einem Anteil von 0,05 bis 3 Gew.-%, bezogen auf die Zusammensetzung verwendet.

Werden Flammschutzmittel verwendet, so werden davon bevorzugt bis zu 15 Gew.-%, besonders bevorzugt 0,05 bis 15 Gew.-%, bezogen auf die Zusammensetzung, verwendet.

Werden Fließfähigkeitspromotoren, polymere Antistatika und Phasenverträglichkeitsvermittler eingesetzt, so ist der verwendete Anteil jeweils bevorzugt bis 10 Gew.-%, besonders bevorzugt 0,05 bis 10 Gew.-% und in Summe bevorzugt 0,05 bis 15 Gew.-%, bezogen auf die Zusammensetzung.

Werden Schlagzähmodifikatoren oder polymere Blendparter eingesetzt, so ist der verwendete Anteil in Summe bevorzugt bis zu 18 Gew.-%, besonders bevorzugt 0,05 bis 18 Gew.-%, bezogen auf die Zusammensetzung.

Werden Farbstoffe oder Pigmente eingesetzt, so ist der verwendete Anteil in Summe aller eingesetzten Farbstoffe und Pigmente bevorzugt bis zu 10 Gew.-%, besonders bevorzugt 0,1 bis 10 Gew.-%, bezogen auf die Zusammensetzung.

In einer bevorzugten Ausführungsform werden anorganische Pigmente mit einem Anteil von maximal in Summe 3 Gew.-%, besonders bevorzugt von maximal in Summe 1,5 Gew.-%, weiter bevorzugt von maximal 0,5 Gew.-%, jeweils bezogen auf die Zusammensetzung verwendet. **In** der am meisten bevorzugten Ausführungsform werden keine anorganischen Pigmente als Bestandteil der Komponente C eingesetzt.

Werden Füll- und Verstärkungsstoffe eingesetzt, so ist der verwendete Anteil bevorzugt 3 bis 10 Gew.-%, bezogen auf die Zusammensetzung.

In einer bevorzugten Ausführungsform werden keine Füll- und Verstärkungsstoffe eingesetzt.

In bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, Schlagzähigkeitsmodifikatoren, weiteren polymeren Blendpartnern und Farbstoffen eingesetzt.

In bevorzugter Ausführungsform wird als Entformungsmittel Pentaerythrittetrastearat eingesetzt.

In bevorzugter Ausführungsform wird als Stabilisator mindestens ein Vertreter ausgewählt aus der Gruppe bestehend aus sterisch gehinderten Phenolen, organischen Phosphiten und Schwefel-basierten Co-Stabilisatoren eingesetzt.

In besonders bevorzugter Ausführungsform wird als Stabilisator mindestens ein Vertreter ausgewählt aus der Gruppe bestehend aus Octadecyl-3-(3,5-di-tert-butyl-4-hydroxyphenyl)propionat und Tris(2,4-di-tert-butylphenyl)phosphit eingesetzt.

### Herstellung von Formmassen und Formkörpern aus den erfindungsgemäßen Zusammensetzungen

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile der Zusammensetzungen bei Temperaturen von 220°C bis 320°C, bevorzugt 230 bis 300°C, besonders bevorzugt 240 bis 280°C, am meisten bevorzugt 250 bis 270°C miteinander in der Schmelze vermischt.

Gegenstand der Erfindung ist auch ein entsprechendes Verfahren zur Herstellung der erfindungsgemäßen Formmassen.

Das Verfahren umfasst die Schritte
(i) Aufschmelzen der Bestandteile der Zusammensetzung durch Einbringen thermischer Energie und/oder mechanischer Scherung,
(ii) Vermischen und Dispergieren der verschiedenen Komponenten der Zusammensetzung mit- bzw. ineinander,
(iii) Verfestigen der Schmelze durch Abkühlen,
(iv) Granulieren des verfestigten aus den Schritten (i) - (iii) resultierenden Polymerblends.

Die Verweilzeit der Komponenten bei den oben genannten Temperaturen liegt bevorzugt in einem Bereich von 15 Sekunden bis 30 Minuten, weiter bevorzugt 30 Sekunden bis 20 Minuten. Bei Verwendung von Extrudern oder kontinuierlichen Co-Knetern als Compoundieraggregat beträgt die Verweilzeit bevorzugt 15 Sekunden bis 5 Minuten, besonders bevorzugt 30 Sekunden bis 2 Minuten.

Nach Schritt ii) kann auch ein Entgasen der vorliegenden Zusammensetzung durch Anlegen eines Unterdrucks erfolgen. Als Absolutdruck wird bevorzugt ein Druck von maximal 400 mbar, weiter bevorzugt von maximal 200 mbar, besonders bevorzugt von maximal 100 mbar eingestellt.

Das Vermischen kann in üblichen Aggregaten geschehen, wie beispielsweise in Einwellenextrudern, gleichläufigen oder gegenläufige Doppelwellenextrudern, Planetwalzenextrudern, Innenknetern oder kontinuierlichen oder diskontinuierlichen Co-Knetern. Darin werden die Zusammensetzungen zu Formmassen schmelzcompoundiert oder schmelzextrudiert. Dieser Prozess wird im Rahmen dieser Anmeldung allgemein als Compoundieren oder Schmelzcompoundieren bezeichnet. Unter Formmasse wird also das Produkt verstanden, das erhaltend wird, wenn die Bestandteile der Zusammensetzung schmelzcompoundiert und schmelzextrudiert werden. Eine solche Formmasse ist ein weiterer Gegenstand der vorliegenden Erfindung.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile vollständig oder teilweise über den Haupteinzug eines Extruders dosiert und die restlichen Bestandteile vollständig oder teilweise über einen Seitenextruder später im Compoundierverfahren zugeführt werden können.

Bei der Durchführung des oben beschriebenen Verfahrens werden die Epoxy-Gruppen in den vom Glycidylmethacrylat abgeleiteten Struktureinheiten in Komponente B teilweise oder vollständig chemisch umgesetzt. Diese Umsetzung kann über die Abnahme des Epoxid-Äquivalents, bestimmt in Dichlormethan als Lösungsmittel bei Raumtemperatur gemäß DIN EN 1877-1 (Version 12-2000), nachgewiesen und quantitativ verfolgt werden. Alternativ kann die Umsetzung mittels ¹H-NMR-spektroskopischer Untersuchungen quantitativ verfolgt und nachgewiesen werden. Dabei werden die charakteristischen ¹H-NMR-Multiplet-Signale der Protonen im ungeöffneten Epoxy-Ring bei 2,58-2,64 ppm, 2,80-2,84 ppm und 3,15-3,22 ppm (gemessen in deuteriertem Chloroform CD₂Cl₂ als Lösungsmittel mit einem 600 MHz-Gerät der Fa. Bruker, Karlsruhe, Deutschland) zu Grunde gelegt, deren Intensität mit zunehmender Umsetzung der Epoxy-Gruppen abnimmt. Die chemischen Verschiebungen sind relativ zu Tetramethylsilan angegeben. Bei der Durchführung des oben beschriebenen Verfahrens erfolgt bevorzugt eine chemische Kopplung der Komponente A oder eines Teils der Komponente A an die Komponente B oder einen Teil der Komponente B unter Bildung eines PC-PMMA-Copolymers. Dabei reagieren im Allgemeinen die COOH-Gruppen in der Komponente A mit den Epoxy-Gruppen der Komponente B. Im Allgemeinen handelt es sich bei dem Copolymer aus der Umsetzung der Polymere A und B um ein Blockcopolymer oder Pfropfcopolymer enthaltend Blöcke aus den Komponenten A und B.

Die chemische Reaktion der Epoxy-Gruppen in den vom Glycidylmethacrylat abgeleiteten Struktureinheiten in Komponente B mit den Carboxy-Gruppen in Komponente A unter Ausbildung eines Copolymers enthaltend Blöcke aus den Komponenten A und B lässt sich über die simultan zur Abnahme der Epoxy-Gruppen erfolgende Abnahme der Säurezahl, bestimmt in DCM/Ethanol als Lösungsmittel mittels potenziometrischer Titration mit ethanolischer KOH-Lösung bei Raumtemperatur verfolgen. Der Nachweis des Reaktionsprodukts ist über ¹H-NMR-Spektroskopie möglich. Die NMR-Spektroskopie erlaubt als Alternative zu den zuvor genannten Titrationsmethoden ebenso eine quantitative Verfolgung der chemischen Reaktion. Bei Bildung von Kopplungsprodukten enthaltend Blöcke aus den Komponenten A und B erscheinen in der Regel aufgrund der Additionsverknüpfung der Carboxy-Gruppe der Komponente A an die Epoxy-Gruppe der Komponente B mehrere neue, oft sehr breite und schlecht aufgelöste Multiplett-Signale im ¹H-NMR-Spektrum im Bereich zwischen 4,18-4,55 ppm. Aufgrund ihrer Breite und der in der Regel sehr geringen Konzentration der Verknüpfungsgruppen ist ein NMR-spektroskopischer Nachweis jedoch nicht immer (einfach) sicher möglich und erfordert regelmäßig eine starke Vergrößerung des entsprechenden Spektrumbereichs und die Aufnahme eines Spektrums mit einem exzellenten Signal-Rausch-Verhältnis.

Eine weitere Möglichkeit zum Nachweis der Ausbildung von Copolymeren enthaltend Blöcke aus den Komponenten A und B besteht in der Durchführung von 2D-DOSY-1H-NMR-Untersuchungen. Hierbei äußert sich die Bildung von Copolymeren in einer Verringerung des Diffusionskoeffizienten des Reaktionsproduktes gegenüber den Komponenten in der entsprechenden physikalischen Polymermischung aus Komponenten A und B.

Es ist weiterhin bevorzugt, dass die im Schritt i) eingesetzte Mischung enthaltend Komponenten A, B und optional C einen Restfeuchtegehalt bestimmt durch Karl-Fischer Titration von 0,01 bis 0,50 Gew.-%, weiter bevorzugt von 0,07 bis 0,20 Gew.-%, jeweils bezogen auf die Summe an A, B und C, aufweist. Bei zu hoher Feuchtigkeit besteht die Gefahr von unerwünscht hohem Molekulargewichtsabbau.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in den Förderextruder einer Spritzgussmaschine zu dosieren, die erfindungsgemäße Formmasse dabei in dem Förderextruder herzustellen und durch entsprechenden Austrag der Formmasse in eine Spritzgussform direkt zu Formkörper zu verarbeiten (Compoundierungs- oder Reaktivcompoundierungsspritzguss).

Ein solches Verfahren ist ein weiterer Gegenstand der vorliegenden Erfindung und umfasst die folgenden Schritte:
(i) Dosieren der Bestandteile der erfindungsgemäßen Zusammensetzung in den Förderextruder einer Spritzgussmaschine,
(ii) Aufschmelzen der Bestandteile der erfindungsgemäßen Zusammensetzung durch Einbringen thermischer Energie und/oder mechanischer Scherung,
(iii) Fördern der Schmelze zur Austragsstelle des Extruders,
(iv) Austrag der Schmelze aus dem Förderextruder in eine Spritzgussform,
(v) Abkühlen und Verfestigen der Schmelze in der Spritzgussform unter Ausbildung eines Formkörpers,
(vi) Entnahme des Formkörpers aus der Spritzgussform.

**In** bevorzugter Ausführungsform dieses Verfahrens beträgt die Verweilzeit der Schmelze im Förderextruder mindestens zwei, weiter bevorzugt mindestens fünf, besonders bevorzugt mindestens sieben Minuten.

In bevorzugter Ausführungsform dieses Verfahrens beträgt die Verweilzeit der Schmelze im Förderextruder 2 bis 30 Minuten, weiter bevorzugt 5 bis 20 Minuten, besonders bevorzugt 7 bis 15 Minuten.

In bevorzugter Ausführungsform erfolgen die Verfahrensschritte (iii) und (iv) unter Scherung. Dieses kann beispielsweise erreicht werden durch eine hohe Schneckendrehzahl bei der Schmelzeförderung im Schritt (iii) und/oder durch eine geeignete Schneckenkonfiguration der Förderschnecke, beispielsweise durch den Einsatz von Knetelementen, sowie durch geeignet enge Geometrie der Schmelzeaustrittsdüse im Schritt (iv).

Ein weiterer Gegenstand der vorliegenden Erfindung betrifft somit die Verwendung einer erfindungsgemäßen Zusammensetzung oder einer erfindungsgemäßen Formmasse zur Herstellung von Formkörpern, sowie ferner auch einen Formkörper, der aus einer erfindungsgemäßen Zusammensetzung oder aus einer erfindungsgemäßen Formmasse erhältlich ist oder eine solche Formmasse enthält.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die erfindungsgemäßen Zusammensetzungen und Formmassen eignen sich aufgrund ihrer besonderen technischen Eigenschaften bevorzugt zur Herstellung von mit Licht im sichtbaren Wellenlängenbereich, beispielsweise einer LED-Lichtquelle, durchleuchtbaren Formkörpern für Beleuchtungs- und Lichtleiteranwendungen im Automobilbereich, im Bausektor und im Elektronikbereich. Insbesondere eignen sie sich zur Herstellung durchleuchtbarer Formteile für den Einsatz im Automobilinnenraum wie beispielsweise Instrumententafelträger oder Zierblenden oder in automobilen Karosserieanwendungen, welche beispielsweise einer ambienten Beleuchtung oder bedarfsgerecht schaltbaren Funktionsanzeige (beispielsweise Tag-/Nacht-Differenzierung) dienen sollen.

### Beispiele

### Zusammensetzungen

### Komponente A1

Bisphenol A-basiertes Polycarbonat mit terminalen Carboxy-Gruppen und mit einem gewichtsgemittelten Molekulargewicht M_{w} von 26.000 g/mol und einem zahlgemittelten Molekulargewicht Mₙ von 15.000 g/mol, gemessen bei Raumtemperatur in Methylenchlorid als Lösungsmittel gegen einen BPA-Polycarbonat-Kalibrierungsstandard. Die Säurezahl von Komponente A1 wurde mit 1,7 mg KOH/g ermittelt. Das zu untersuchende Polymer wurde für die Säurezahlbestimmung in einer Konzentration von 10 g/L in 50 ml Methylenchlorid bei Raumtemperatur gelöst. Vor der potentiometrischen Titration mit 0,1 N ethanolischer KOH wurden der Probenlösung 2,5 ml Ethanol zugegeben.

Die Herstellung der Komponente A1 erfolgte in zwei Schritten. In Schritt a) wurde eine Vorstufe enthaltend Struktureinheiten abgeleitet von tert.-Butyl-4-Hydroxybenzoat als Endgruppen hergestellt und in Schritt b) wurde durch thermische Endgruppenpyrolyse terminale Carboxy-Gruppen freigesetzt.

### a) Herstellung der Polycarbonat-Vorstufe (PC-1)

In einem kontinuierlich betriebenen Laborreaktor wurde Bisphenol A im Grenzflächenverfahren in einem Gemisch aus Methylenchlorid und Chlorbenzol als Lösemittel in Anwesenheit einer Kettenabbrechermischung bestehend aus p-tert.-Butylphenol und tert.-Butyl-4-Hydroxybenzoat mit Phosgen zur Polykondensationsreaktion gebracht.

Im Rahmen dieser Synthese wurden 72,2 g/h gasförmiges Phosgen in 959 g/h organischem Lösemittelgemisch aus 50 Gew.-% Methylenchlorid und 50 Gew.-% Chlorbenzol bei -7 °C gelöst. Die derart hergestellte Phosgen-Lösung wurde in Kontakt gebracht mit 907 g/h einer auf 30°C temperierten 15 Gew.-%igen wässrigen alkalischen Bisphenol A-Lösung. Dafür wurde die alkalische Bisphenol A-Lösung durch einen Edelstahlfilter mit der Porengröße 90 µm in der Phosgen-Lösung gepresst und dadurch in dieser dispergiert. In der Bisphenol A-Lösung wurden 2 mol NaOH auf 1 mol Bisphenol-A eingesetzt. Das Reaktionsgemisch wurde in einer auf 25°C temperierten Fink HMR040 Mischpumpe bis zur vollständigen Umsetzung des Phosgens abreagiert. Danach wurden 4,11 g/h eines Gemisches aus 50 mol-% p-tert.-Butylphenol und 50 mol-% tert.-Butyl-4-Hydroxybenzoat als Kettenabbrecher zudosiert, und zwar in Form einer 3 Gew.-%igen Lösung im Lösemittelgemisch aus 50 Gew.-% Methylenchlorid und 50 Gew.-% Chlorbenzol. Das so erhaltene Reaktionsgemisch wurde in einer zweiten, auf 25°C temperierten Fink HMR040 Mischpumpe mit 66,52 g/h 32 Gew.-%iger wässriger Natronlauge weiterreagiert. Es folgten zwei überflutet gefahrene, mit Strömungsbrechern ausgestattete Rührkessel mit einer Verweilzeit von jeweils 600 s, jeweils gefolgt von einer Zahnradpumpe, die sowohl der Förderung des Reaktionsgemisches als auch der weiteren Dispergierung dienen. Nach der ersten Pumpe, d.h. vor dem zweiten Rührkessel, wurde als Katalysator 0,679 g/h einer 10 Gew.%-igen Lösung von N-Ethylpiperidin in Chlorbenzol zudosiert. Am Ende der Reaktion lag der pH-Wert bei etwa 11,5. In einem Phasentrenngefäß wurde die organische von der wässrigen Phase des zweiphasigen Reaktionsgemisches getrennt und die organische Phase mit einer 0,1 Gew.-%igen wässrigen HCl-Lösung zur Entfernung des Katalysators gewaschen. Nachfolgend wurde weiterhin mit vollentsalztem Wasser zur Entfernung der Salzreste gewaschen. Die derart gewaschene Polymerlösung wurde in organischem Lösungsmittel gefällt und über Nacht im Vakuumofen bei 120 °C getrocknet.

### b) Endgruppenpyrolyse der Polycarbonat-Vorstufe PC-1

Die Freisetzung der COOH-Endgruppen durch thermische Endgruppenpyrolyse der gemäß dem zuvor beschriebenen Verfahren hergestellten Polcarbonat-Vorstufe PC-1 unter Abspaltung der Schutzgruppe in Form von Isobutylen-Gas erfolgte in einem kontinuierlichen Doppelwellen-Extruder vom Typ Process 11 (Thermofischer Scientific, Karlsruhe, Deutschland) mit einer Schneckenkonfiguration mit drei Mischzonen und mit einem Verhältnis an Länge zu Durchmesser (L/D) von 40. Die Schmelzetemperatur betrug 250°C, gemessen über einen düsenaustrittsnah im letzten Gehäuseelement des Extruders verbauten Thermofühler. Die Schmelzetemperatur resultierte dabei aus dem Eintrag mechanischer Energie durch die Knetelemente sowie dem Eintrag thermischer Energie durch die Beheizung des Extrudergehäuses. Das Extrudergehäuse ist in acht separat und unterschiedlich beheizbare Zonen eingeteilt. Die drei Knetzonen befanden sich im Übergang der Heizzonen 3 und 4, in der Heizzone 5 sowie im Übergang der Heizzonen 6 und 7. Der Rohstoffeinzug befindet sich in der Heizzone 1. Darüber hinaus ist die Austrittsdüse separat beheizbar. Zur Einstellung der Schmelzetemperatur wurden die Gehäusetemperaturen in den Gehäusezonen sowie die Austrittdüse wie folgt temperiert: Das erste Gehäuse (Rohstoffeinzugszone) wurde nicht beheizt, Zone 2 wurde auf eine Soll-Temperatur von 70°C beheizt, Zone 3 wurde auf eine Soll-Temperatur von 160°C beheizt und Zonen 4 bis 8 wurden auf dieselbe Soll-Temperatur von 260°C beheizt. Die Düse wurde ebenfalls auf 260°C beheizt. Der Extruder wurde mit einem Durchsatz von etwa 300 g/h und mit einer Drehzahl von 175 min⁻¹ betrieben. Durch Anlegen eines Unterdruckes von ca. 100 mbar (absolut) wurde das im Extruder unter diesen Verfahrensbedingungen freigesetzte Isobutylen-Gas kontinuierlich über einen Entgasungsdom in der vorletzten (siebten) Heizzone aus dem Extruder abgezogen. Unter diesen Verfahrensbedingungen ergab sich eine Verweilzeit des Polycarbonat im Extruder von ca. 70 s.

### Komponente A2

Komponente A2 unterscheidet sich von Komponente A1 lediglich in der Temperaturführung im Verfahrensschritt b), das heißt in der Endgruppenpyrolyse der Polycarbonat-Vorstufe PC-1. Das erste Gehäuse (Rohstoffeinzugszone) wurde nicht beheizt, Zone 2 wurde auf eine Soll-Temperatur von 70°C beheizt, Zone 3 wurde auf eine Soll-Temperatur von 190°C beheizt und Zonen 4 bis 8 wurden auf dieselbe Soll-Temperatur von 240°C beheizt. Die Düse wurde ebenfalls auf 240°C beheizt. Die anderen Verfahrensparameter wurden gegenüber der Herstellung der Komponente A1 nicht verändert. Dadurch resultierte eine Schmelzetemperatur von 231°C, gemessen über den düsenaustrittsnah im letzten Gehäuseelement des Extruders verbauten Thermofühler. Komponente A2 weist eine Säurezahl von 3,0 mg KOH/g und dasselbe Molekulargewicht wie Komponente A1 auf.

### Komponente A3

Bisphenol A-basiertes Polycarbonat, hergestellt im Phasengrenzflächenverfahren, mit einem gewichtsgemittelten Molekulargewicht M_{w} von 26.000 g/mol, gemessen bei Raumtemperatur in Methylenchlorid als Lösungsmittel gegen einen BPA-Polycarbonat-Kalibrierungsstandard. Als Kettenabbrecher wurde bei der Herstellung der Komponente A3 ausschließlich 4-tert-Butylphenol verwendet. Das Polycarbonat enthält keine Carboxy-Gruppen.

### Komponente B1

Statistisches Polymethylmethacrylat-Glycidylmethacrylat-Copolymerisat mit einem Gehalt an von Glycidylmethacrylat abgeleiteten Struktureinheiten von 1,0 Gew.-% hergestellt durch radikalische Polymerisation. Komponente B1 weist ein gewichtsgemitteltes Molekulargewicht M_{w} von 60.000 g/mol, gemessen mittels Gelpermeationschromatographie bei Raumtemperatur in Tetrahydrofuran als Lösungsmittel gegen einen Polystyrol-Kalibrierungsstandard, auf. Das Epoxid-Äquivalent von Komponente B1 wurde gemäß DIN EN 1877-1 (Version 12-2000) in Dichlormethan bei Raumtemperatur zu 0,32 Gew.-% bestimmt.

### Komponente B2

Polymethylmethacrylat mit einem gewichtsgemittelten Molekulargewicht M_{w} von 58.000 g/mol, gemessen mittels Gelpermeationschromatographie bei Raumtemperatur in Tetrahydrofuran als Lösungsmittel gegen einen Polystyrol-Kalibrierungsstandard. Komponente B2 enthält keine von Glycidylmethacrylat abgeleiteten Struktureinheiten.

Komponente C1: Tetrabutylphosphoniumacetat-Essigsäurekomplex (Sachem Inc., Austin, USA)

### Herstellung der thermoplastischen Formmassen

Die für die Herstellung der thermoplastischen Formmassen eingesetzten Rohstoffe wurden bei der Compoundierung als Pulver eingesetzt, welche aus Granulaten mittels Kryovermahlung hergestellt wurden.

Die thermoplastischen PC/PMMA-Formmassen aus den in Tabelle 1 dargestellten Zusammensetzungen wurden auf einem kontinuierlichen Doppelwellen-Extruder vom Typ Process 11 (Thermofischer Scientific, Karlsruhe, Deutschland) mit einer Dispergierschneckenkonfiguration mit zwei Mischzonen bei einer Schmelzetemperatur von 260°C, einem Durchsatz von etwa 300 g/h, einer Drehzahl von 125 min⁻¹ und bei einem Absolutdruck von 100 mbar compoundiert. Unter diesen Bedingungen ergab sich eine Verweilzeit von ca. 90 s. Nach Austritt durch eine Düsenplatte wurde der Schmelzestrang abgekühlt, dadurch verfestigt und anschließend granuliert. Für die Compoundierungen wurden zunächst Pulvermischungen der Komponenten A und B hergestellt und diese gleichmäßig über einen volumetrischen Dosierer in die Einlaufzone des Doppelwellenextruders dosiert.

### Herstellung der Prüfkörper

Aus den thermoplastischen Formmassen, welche aus den Zusammensetzungen gemäß Tabelle 1 hergestellt wurden, wurden mittels einer Laborthermopresse vom Typ Polystat 200 der Firma Servitec Maschinenservice GmbH (Wustermark, Deutschland) bei einer Temperatur von 260°C, einem Druck von 100 bar und einer Pressdauer von insgesamt 4 min Rundplatten mit einem Durchmesser von 25 mm und einer Dicke von 1 mm hergestellt.

Weiterhin wurden aus den thermoplastischen Formmassen, welche aus den Zusammensetzungen gemäß Tabelle 1 hergestellt wurden, auf einer Spritzgießmaschine vom Typ Arburg Allrounder 470 H 1000-170 der Fa. Arburg GmbH + Co KG (Loßburg, Deutschland) Rechteckplatten der Abmessung 80 mm x 80 mm x 1 mm sowie Prüfstäbe der Abmessung 80 mm x 10 mm x 4 mm bei einer Schmelzetemperatur von 270°C, einer Werkzeugtemperatur von 60°C und einem Einspritzdruck von 2000 bar hergestellt.

### Anwendungstechnische Prüfungen

Als Maß für die Kratzfestigkeit wurde die sogenannte Bleistifthärte ermittelt. Die Messung erfolgte bei Raumtemperatur mittels eines Ritzhärteprüfers vom Typ TriForcePencil Modell 293 der Fa. Erichsen GmbH & Co. KG (Hemer, Deutschland) gemäß Prüfvorschrift des Geräteherstellers in Anlehnung an das Verfahren von Wolff-Wilborn an den spritzgegossenen Prüfplatten der Dimension 80 mm x 80 mm x 1 mm. Die Bleistifte wurden dazu in einem zur Prüfoberfläche geneigten Winkel von 45° in die Messvorrichtung eingespannt und mit einer Prüfkraft von 5 N über die Probekörperoberfläche geschoben. Es wurde mit dem härtesten Bleistift gestartet und die Härte dann sukzessive reduziert. Die Bleistifthärte des Bleistifts, dessen Spitze bei diesem Vorgehen als erstes keinen fühlbaren Kratzer mehr hinterlässt, gilt dabei als die die Kratzfestigkeit der Kunststoffoberfläche charakterisierende Größe.

Die Spannungsrissbeständigkeit unter Chemikalieneinfluss (ESC-Verhalten) wurde in Rapsöl bei Raumtemperatur beurteilt. Bestimmt wurde die Zeit bis zum spannungsrissinduzierten Bruchversagen ermittelt an spritzgegossenen Prüfstäben der Abmessung 80 mm x 10 mm x 4 mm, welche mittels einer Spannschablone mit einer externen Radfaserdehnung von 2,4% beaufschlagt und im Rapsöl vollständig eingetaucht waren. Die Messung erfolgte gemäß DIN EN ISO 22088 (Version von 2006).

Die Transparenz der Formmassen wurde an thermogepressten Rundplatten mit einem Durchmesser von 25 mm und einer Dicke von 1 mm sowie an spritzgegossenen Rechteckplatten der Abmessung 80 mm x 80 mm x 1 mm bei Raumtemperatur bestimmt. Die entsprechenden wellenlängenabhängigen totalen Transmissionsgrade wurden nach DIN 5033-7 (2014) bestimmt. Daraus wurde nach DIN EN ISO 11664-3 (2013) mit der Lichtart D65 und dem 10°-Beobachter der Wert Y(D65, 10°) berechnet. Weiterhin wurden die wellenlängenspezifischen Transmissionsgrade bei Wellenlängen von 700 nm (T₇₀₀) und 400 nm (T₄₀₀) ermittelt.

Die Duktilität der Formmassen wurde an thermogepressten Rundplatten mit einem Durchmesser von 25 mm und einer Dicke von 1 mm bei Raumtemperatur in einem Aufprallversuch beurteilt. Die Messungen erfolgten mit einem Eigenbau-Fallwerk (Fallmasse 1,86 kg, Auflager-Durchmesser 15 mm, Dorndurchmesser (halbkugelförmig) 7 mm). Dabei wurde die Fallhöhe der Fallmasse systematisch variiert und beurteilt, bis zu welcher Fallhöhe der Prüfkörper nicht durchstoßen wird.

### Analytischer Nachweis der chemischen Umsetzung der Epoxy-Gruppen in Komponente B und der Blockcopolymerbildung bei der Herstellung der Formmassen

Bei der Herstellung der erfindungsgemäßen Formmassen durch Compoundierung wurden die Epoxy-Gruppen in Komponente B teilweise chemisch umgesetzt. Diese chemische Umsetzung der Epoxy-Gruppen wurde ¹H-NMR-spektroskopisch verfolgt und nachgewiesen. Dabei wurden die charakteristischen ¹H-NMR-Multiplet-Signale der Protonen im ungeöffneten Epoxy-Ring bei 2,58-2,64 ppm, 2,80-2,84 ppm und 3,15-3,22 ppm (gemessen bei Raumtemperatur in deuteriertem Chloroform CD₂Cl₂ als Lösungsmittel mit einem 600 MHz-Gerät der Fa. Bruker, Karlsruhe, Deutschland) zu Grunde gelegt. Deren Intensität nahm bei der Herstellung der erfindungsgemäßen Formmassen durch Compoundierung gegenüber der physikalischen Mischung der Ausgangskomponenten ab. Gleichzeitig entstanden im ¹H-NMR-Spektrum bei dieser Umsetzung mehrere neue, sehr breite und vergleichsweise schlecht aufgelöste Multiplett-Signale im Bereich zwischen 4,18-4,55 ppm, welche der Verknüpfungsgruppe zugeordnet wird, die durch nucleophile Addition von Carboxy-Gruppen der Komponente A an Epoxy-Gruppen der Komponente B entsteht. Das Auftreten dieser neuen Signale zeigt somit, dass durch die chemische Umsetzung der Epoxy-Gruppen in Komponente B Copolymer enthaltend Blöcke aus den Komponenten A und B entstanden ist.

**Tabelle 1: Zusammensetzungen und Eigenschaften der daraus hergestellten Formmassen**

| **Zusammensetzung (Gew.-Teile)** | **1** | **2** | **3** | **4** | **5** | **6** | **V7** | **V8** | **V9** | **V10** |
|---|---|---|---|---|---|---|---|---|---|---|
| A1 | 80 | 70 | | | | | | | | |
| A2 | | | 80 | 70 | 62 | 40 | 30 | | | |
| A3 | | | | | | | | 80 | 80 | 100 |
| B1 | 20 | 30 | 20 | 30 | 38 | 60 | 70 | | | |
| B2 | | | | | | | | 20 | 20 | |
| C1 | | | | | | | | | 0,05 | |

| **Merkmale** | | | | | | | | | | |
|---|---|---|---|---|---|---|---|---|---|---|
| Säurezahl von Komponente A [mg KOH/g] | 1,7 | 1,7 | 3,0 | 3,0 | 3,0 | 3,0 | 3,0 | 0 | 0 | 0 |
| Epoxid Äquivalente von Komponente B [Gew.-%] | 0,32 | 0,32 | 0,32 | 0,32 | 0,32 | 0,32 | 0,32 | 0 | 0 | - |
| (Anteil (A) x SZ (A)) / (Anteil (B) x Epoxid-Äquivalent (B)) | 21 | 12 | 38 | 22 | 15 | 6 | 4 | - | - | - |

| **Eigenschaften** | | | | | | | | | | |
|---|---|---|---|---|---|---|---|---|---|---|
| Transmission Y(D65,10°) (am Pressformkörper) | 82 | 44 | 83 | 67 | 71 | 46 | 30 | 22 | 32 | 90 |
| Transmission Y(D65,10°) (am Spritzgussformkörper) | | | 89 | | | | | | | |
| T₄₀₀ (am Pressformkörper) | 65 | 17 | 68 | 37 | 42 | 16 | 14 | 16 | 22 | 88 |
| T₇₀₀ (am Pressformkörper) | 87 | 70 | 87 | 80 | 82 | 71 | 49 | 25 | 39 | 91 |
| 100×(T₇₀₀-T₄₀₀)/Y(D65,10°) (am Pressformkörper) | 27 | 120 | 24 | 64 | 56 | 120 | 117 | 41 | 53 | 3 |
| T₄₀₀ (am Spritzgussformkörper) | | | 87 | | | | | | | |
| T₇₀₀ (am Spritzgussformkörper) | | | 90 | | | | | | | |
| 100×(T₇₀₀-T₄₀₀)/Y(D65,10°) (am Spritzgussformkörper) | | | 3 | | | | | | | |
| Bleistifthärte | | | 3H-4H | | | | | 2H | | F |
| ESC (Zeit bis Bruch in Rapsöl bei 2,4%) [h] | | | >168 | | | | | 0,4 | | 2,7 |
| Duktilität - Prüfkörper nicht durchstoßen bis zu einer Höhe von [cm] | 16 | 15 | 20 | | | | | 16 | <1 | 25 |

Die Daten in Tabelle 1 zeigen, dass Formkörper hergestellt aus den erfindungsgemäßen Zusammensetzungen 1 bis 6 eine deutlich bessere Transmission (Transparenz) aufweisen als Formkörper hergestellt aus Zusammensetzungen enthaltend nicht reaktiv modifiziere PC- und PMMA-Komponenten (V8). Gegenüber V8 zeigt die erfindungsgemäße Zusammensetzung 3 bei gleichen Anteilen der Komponenten A und B zudem eine deutliche erhöhte Bleistifthärte sowie eine wesentlich verbesserte Chemikalienbeständigkeit. Bleistifthärte und Chemikalienbeständigkeit der erfindungsgemäßen Zusammensetzung 3 sind ebenfalls erheblich besser als bei reinem Polycarbonat (V10).

Die Transparenz der erfindungsgemäßen Zusammensetzungen 1 und 3 ist ebenso verbessert gegenüber einer reaktiv compoundierten Zusammensetzung mit gleichen Anteilen an Komponenten A und B enthaltend nicht reaktiv modifiziertes Polycarbonat, nicht reaktiv modifiziertes PMMA sowie einen Umesterungskatalysator, wie sie in WO 2020/212229 A1 offenbart wurde (V9). Weiterhin ist bei den erfindungsgemäßen Zusammensetzungen 1 und 3 die Duktilität erheblich höher als bei V9.

Ein Vergleich der erfindungsgemäßen Beispiele 3 bis 6 mit dem Vergleichsbeispiel V7 zeigt, dass die angestrebte Durchleuchtbarkeit (Transmission) bei einem Gehalt an Komponente A von 30 Gew.-% nicht mehr erzielt wird.

Ein Vergleich der erfindungsgemäßen Beispiele 3 bis 6 zeigt, dass höhere Gehalte an Komponente A bevorzugt sind.

Ein Vergleich der erfindungsgemäßen Beispiele 2 und 4 sowie 1 und 3 zeigt, dass höhere Verhältnisse aus (i) dem Produkt aus Säurezahl der Komponente A (in mg Kaliumhydroxid (KOH)/g) und dem Gew.-Anteil an Komponente A, bezogen auf in Summe 100 Gew.-Teile der Komponenten A und B, und (ii) dem Produkt aus Epoxid-Äquivalent der Komponente B (in Gew.-%) und dem Gew.-Anteil an Komponente B, bezogen auf in Summe 100 Gew.-Teile der Komponenten A und B, das heißt (Anteil (A) x SZ (A)) / (Anteil (B) x Epoxid-Äquivalent (B)) bevorzugt sind. Das gilt umso mehr, je niedriger der Gehalt an Komponente A in der Zusammensetzung ist (vergleiche Beispiele 2 und 4 mit 1 und 3).

Bei dem am meisten bevorzugten Beispiel 3 ist zudem die Transmission, insbesondere die Transmission von spritzgegossenen Formteilen, über den gesamten Wellenlängenbereich des sichtbaren Lichtes besonders gleichmäßig, wie sich aus dem geringsten Wert für 100×(T₇₀₀-T₄₀₀)/Y(D65,10°) aller Beispiele ablesen lässt. Ferner ist bei diesem am meisten bevorzugten Beispiel 3 die Duktilität besonders hoch.

## Patentansprüche

1. Zusammensetzung enthaltend
A) ein Carboxy-Gruppen enthaltendes aromatisches Polycarbonat und/oder aromatisches Polyestercarbonat, wobei das Polycarbonat eine Säurezahl im Bereich von 0,5 bis 10 mg Kaliumhydroxid/g, bestimmt in Dichlormethan/Ethanol als Lösungsmittel mittels potenziometrischer Titration gemäß DIN EN ISO 2114, Methode A in der Version 2002-06 mit ethanolischer Kaliumhydroxid-Lösung bei Raumtemperatur, und ein gewichtsgemitteltes Molekulargewicht M_{w}, ermittelt per Gelpermeationschromatographie bei Raumtemperatur in Dichlormethan als Lösungsmittel mit einem BPA-Polycarbonat-Standard, im Bereich von 10.000 bis 40.000 g/mol aufweist und
B) ein Polymethylmethacrylat-Copolymer enthaltend Struktureinheiten abgeleitet von Glycidylmethacrylat, wobei das Copolymer ein Epoxid-Äquivalent, bestimmt in Dichlormethan als Lösungsmittel bei Raumtemperatur gemäß DIN EN 1877-1 in der Version 2000-12, von 0,05 bis 3 Gew.-% und ein gewichtsgemitteltes Molekulargewicht M_{w}, ermittelt mittels Gelpermeationschromatographie bei Raumtemperatur in Tetrahydrofuran als Lösungsmittel mit einem Polystyrol-Standard, von 20.000 bis 200.000 g/mol aufweist,
wobei das Gewichtsverhältnis der Komponenten A und Komponente B im Bereich von 95:5 bis 35:65 liegt.

2. Zusammensetzung gemäß Anspruch 1, wobei es sich bei den Carboxy-Gruppen in der Komponente A ausschließlich um terminale Carboxy-Gruppen handelt.

3. Zusammensetzung gemäß Anspruch 1 oder 2, wobei das Verhältnis aus (i) dem Produkt aus Säurezahl der Komponente A in mg Kaliumhydroxid/g und dem Gew.-Anteil an Komponente A, bezogen auf in Summe 100 Gew.-Teile der Komponenten A und B, und (ii) dem Produkt aus Epoxid-Äquivalent der Komponente B in Gew.-% und dem Gew.-Anteil an Komponente B, bezogen auf in Summe 100 Gew.-Teile der Komponenten A und B, im Bereich von 15 bis 200 liegt.

4. Zusammensetzung gemäß einem der vorhergehenden Ansprüche, wobei die Säurezahl der Komponente A 1,3 bis 5,0 Kaliumhydroxid/g beträgt.

5. Zusammensetzung gemäß einem der vorhergehenden Ansprüche, wobei das gewichtsgemittelte Molekulargewicht M_{w} der Komponente A 20.000 bis 30.000 g/mol beträgt.

6. Zusammensetzung gemäß einem der vorhergehenden Ansprüche, wobei die Komponente B ein Epoxid-Äquivalent von 0,13 bis 0,60 Gew.-% aufweist.

7. Zusammensetzung gemäß einem der vorhergehenden Ansprüche, wobei die Komponente B ein gewichtsgemitteltes Molekulargewicht M_{w} von 50.000 bis 100.000 g/mol aufweist.

8. Zusammensetzung gemäß einem der vorhergehenden Ansprüche, wobei die Komponente B 0,4 bis 2 Gew.-% an von Glycidylmethacrylat abgeleiteten Struktureinheiten enthält.

9. Zusammensetzung gemäß einem der vorhergehenden Ansprüche bestehend aus
35 bis 95 Gew.-%, der Komponente A,
4,99 bis 64,99 Gew.-% der Komponente B und
als Komponente C 0,01 bis 10 Gew.-% Polymeradditive, Prozesshilfsstoffe und/oder von den Komponenten A und B verschiedene Polymere,
wobei die Gew.-% der Komponenten A bis C so gewählt sind, dass sie sich zu 100 Gew.-% summieren.

10. Verfahren zur Herstellung einer thermoplastischen Formmasse umfassend die Schritte
(i) Aufschmelzen der Bestandteile einer Zusammensetzung gemäß einer der vorhergehenden Ansprüche durch Einbringen thermischer Energie und/oder mechanischer Scherung,
(ii) Vermischen und Dispergieren der verschiedenen Komponenten der Zusammensetzung mit- bzw. ineinander,
(iii) Verfestigen der Schmelze durch Abkühlen,
(iv) Granulieren des verfestigten aus den Schritten (i) - (iii) resultierenden Polymerblends,
wobei der Schritt (ii) in einer Compoundierungsmaschine ausgewählt aus der Gruppe bestehend aus Einwellenextrudern, gleichläufigen oder gegenläufigen Doppelwellenextrudern, Planetwalzenextrudern, Innenknetern oder Co-Knetern und bei einer Temperatur der Schmelze von 230 bis 300°C erfolgt.

11. Verfahren gemäß Anspruch 10, wobei in dem Prozess die Epoxy-Gruppen in den vom Glycidylmethacrylat abgeleiteten Struktureinheiten in Komponente B teilweise oder vollständig in einer chemischen Reaktion umgesetzt werden.

12. Thermoplastische Formmasse erhältlich in einem Verfahren gemäß einer der Ansprüche 10 bis 11.

13. Verwendung einer thermoplastischen Formmasse gemäß Anspruch 12 zur Herstellung von Formkörpern.

14. Formkörper enthaltend eine thermoplastische Formmasse gemäß Anspruch 13.

15. Verfahren zur Herstellung eines Formkörpers, umfassend die Schritte
(i) Dosieren der Bestandteile einer Zusammensetzung gemäß einem der Ansprüche 1 bis 9 in den Förderextruder einer Spritzgussmaschine,
(ii) Aufschmelzen der Bestandteile der Zusammensetzung durch Einbringen thermischer Energie und/oder mechanischer Scherung,
(iii) Fördern der Schmelze zur Austragsstelle des Extruders,
(iv) Austrag der Schmelze aus dem Förderextruder in eine Spritzgussform,
(v) Abkühlen und Verfestigen der Schmelze in der Spritzgussform unter Ausbildung eines Formkörpers,
(vi) Entnahme des Formkörpers aus der Spritzgussform.

## Claims

1. Composition comprising
A) a carboxy-containing aromatic polycarbonate and/or aromatic polyester carbonate, wherein the polycarbonate has an acid number in the range from 0.5 to 10 mg potassium hydroxide/g, determined in dichloromethane/ethanol as solvent by potentiometric titration according to DIN EN ISO 2114, method A, version 2002-06, with ethanolic potassium hydroxide solution at room temperature, and a weight-average molecular weight M_{w}, determined by gel permeation chromatography at room temperature in dichloromethane as solvent using a BPA polycarbonate standard, in the range from 10 000 to 40 000 g/mol and
B) a polymethyl methacrylate copolymer containing structural units derived from glycidyl methacrylate, wherein the copolymer has an epoxy equivalent, determined in dichloromethane as solvent at room temperature according to DIN EN 1877-1, version 2000-12, of 0.05% to 3% by weight and a weight-average molecular weight M_{w}, determined by gel permeation chromatography at room temperature in tetrahydrofuran as solvent using a polystyrene standard, of 20 000 to 200 000 g/mol,
wherein the weight ratio of components A to component B is in the range from 95:5 to 35:65.

2. Composition according to Claim 1, wherein the carboxy groups in component A are exclusively terminal carboxy groups.

3. Composition according to Claim 1 or 2, wherein the ratio of (i) the product of the acid number of component A in mg potassium hydroxide/g and the weight fraction of component A, based on in total 100 parts by weight of the components A and B, to (ii) the product of the epoxy equivalent of component B in % by weight and the weight fraction of component B, based on in total 100 parts by weight of the components A and B, is in the range from 15 to 200.

4. Composition according to any of the preceding claims, wherein the acid number of component A is 1.3 to 5.0 potassium hydroxide/g.

5. Composition according to any of the preceding claims, wherein the weight-average molecular weight M_{w} of component A is 20 000 to 30 000 g/mol.

6. Composition according to any of the preceding claims, wherein component B has an epoxy equivalent of 0.13% to 0.60% by weight.

7. Composition according to any of the preceding claims, wherein component B has a weight-average molecular weight M_{w} of 50 000 to 100 000 g/mol.

8. Composition according to any of the preceding claims, wherein component B contains 0.4% to 2% by weight of structural units derived from glycidyl methacrylate.

9. Composition according to any of the preceding claims consisting of
35% to 95% by weight of component A,
4.99% to 64.99% by weight of component B and
0.01% to 10% by weight of polymer additives, process auxiliaries and/or polymers distinct from components A and B as component C,
wherein the % by weight amounts of components A to C are chosen such that they sum to 100% by weight.

10. Process for producing a thermoplastic molding compound comprising the steps of
(i) melting the constituents of a composition according to any of the preceding claims by introducing thermal energy and/or mechanical shear,
(ii) mixing and dispersing the different components of the composition with or in each other,
(iii) solidifying the melt by cooling,
(iv) granulating the solidified polymer blend resulting from steps (i)-(iii),
wherein step (ii) is carried out in a compounding machine selected from the group consisting of single-screw extruders, co-rotating or counter-rotating twin-screw extruders, planetary roller extruders, internal kneaders or co-kneaders and at a temperature of the melt of 230°C to 300°C.

11. Process according to Claim 10, wherein in the process the epoxy groups in the structural units derived from glycidyl methacrylate in component B are partially or completely reacted in a chemical reaction.

12. Thermoplastic molding compound obtainable in a process according to either of Claims 10 to 11.

13. Use of a thermoplastic molding compound according to Claim 12 for producing molded articles.

14. Molded article containing a thermoplastic molding compound according to Claim 13.

15. Process for producing a molded article, comprising the steps of
(i) metering the constituents of a composition according to any of Claims 1 to 9 into the conveying extruder of an injection molding machine,
(ii) melting the constituents of the composition by introducing thermal energy and/or mechanical shear,
(iii) conveying the melt to the discharging point of the extruder,
(iv) discharging the melt from the conveying extruder into an injection mold,
(v) cooling and solidifying the melt in the injection mold to form a molded article,
(vi) removing the molded article from the injection mold.

## Revendications

1. Composition contenant
A) un polycarbonate aromatique et/ou polyestercarbonate aromatique, contenant des groupes carboxy, le polycarbonate présentant un indice d'acide dans la plage de 0,5 à 10 mg d'hydroxyde de potassium par g, déterminé dans du dichlorométhane/éthanol en tant que solvant, par titrage potentiométrique selon DIN EN ISO 2114, méthode A dans la version 2002-06 avec une solution éthanolique d'hydroxyde de potassium à la température ambiante, et une masse moléculaire moyenne en poids M_{w}, déterminée par chromatographie par perméation de gel à la température ambiante dans du dichlorométhane en tant que solvant avec un étalon de polycarbonate-BPA, dans la plage de 10 000 à 40 000 g/mole et
B) un copolymère de poly(méthacrylate de méthyle) contenant des unités structurelles dérivées de méthacrylate de glycidyle, le copolymère présentant un équivalent d'époxyde, déterminé dans du dichlorométhane en tant que solvant, à la température ambiante, selon DIN EN 1877-1 dans la version 2000-12, de 0,05 à 3 % en poids et une masse moléculaire moyenne en poids M_{w}, déterminée par chromatographie par perméation de gel à la température ambiante dans du dichlorométhane en tant que solvant avec un étalon de polystyrène, de 20 000 à 200 000 g/mole,
le rapport en poids du composant A au composant B se situant dans la plage de 95:5 à 35:65.

2. Composition selon la revendication 1, dans laquelle pour ce qui est des groupes carboxy dans le composant A il s'agit exclusivement de groupes carboxy terminaux.

3. Composition selon la revendication 1 ou 2, dans laquelle le rapport entre (i) le produit de l'indice d'acide du composant A en mg d'hydroxyde de potassium par g et de la proportion de poids de composant A, par rapport à un total de 100 parties en poids des composants A et B, et (ii) le produit de l'équivalent époxyde du composant B en % en poids et de la proportion de poids de composant (B), par rapport à un total de 100 parties en poids des composants A et B, se situe dans la plage de 15 à 200.

4. Composition selon l'une quelconque des revendications précédentes, dans laquelle l'indice d'acide du composant A vaut de 1,3 à 5,0 d'hydroxyde de potassium par g.

5. Composition selon l'une quelconque des revendications précédentes, dans laquelle la masse moléculaire moyenne en poids M_{w} du composant A vaut de 20 000 à 30 000 g/mole.

6. Composition selon l'une quelconque des revendications précédentes, dans laquelle le composant B présente un équivalent d'époxyde de 0,13 à 0,60 % en poids.

7. Composition selon l'une quelconque des revendications précédentes, dans laquelle le composant B présente une masse moléculaire moyenne en poids M_{w} de 50 000 à 100 000 g/mole.

8. Composition selon l'une quelconque des revendications précédentes, dans laquelle le composant B contient de 0,4 à 2 % en poids d'unités structurelles dérivées de méthacrylate de glycidyle.

9. Composition selon l'une quelconque des revendications précédentes, constituée de
35 à 95 % en poids du composant A,
4,99 à 64,99 % en poids du composant B et
en tant que composant C 0,01 à 10 % en poids d'additifs pour polymères, d'adjuvants de processus et/ou de polymères différents des composants A et B,
les % en poids des composants A à C étant choisis de manière à faire au total 100 % en poids.

10. Procédé pour la production d'une matière à mouler thermoplastique, comprenant les étapes
(i) fusion des constituants d'une composition selon l'une quelconque des revendications précédentes par introduction d'énergie thermique et/ou de cisaillement mécanique,
(ii) mélange et dispersion des différents composants de la composition les uns avec ou dans les autres,
(iii) solidification par refroidissement de la masse fondue,
(iv) granulation du mélange de polymères solidifié résultant des étapes (i) - (iii),
l'étape (ii) étant effectuée dans une machine de compoundage choisie dans le groupe constitué par les extrudeuses monovis, les extrudeuses double vis à vis contrarotatives ou tournant dans le même sens, les extrudeuses à cylindres planétaires, les malaxeurs internes ou les co-malaxeurs et à une température de la masse fondue de 230 à 300 °C.

11. Procédé selon la revendication 10, dans lequel, dans le processus les groupes époxy dans les unités structurelles dans le composant B, dérivées du méthacrylate de glycidyle, sont partiellement ou totalement mis à réagir dans une réaction chimique.

12. Matière à mouler thermoplastique, pouvant être obtenue dans un procédé selon l'une quelconque des revendications 10 et 11.

13. Utilisation d'une matière à mouler thermoplastique selon la revendication 12 pour la production de corps moulés.

14. Corps moulé contenant une matière à mouler thermoplastique selon la revendication 13.

15. Procédé pour la production d'un corps moulé, comprenant les étapes
(i) introduction dosée des constituants d'une composition selon l'une quelconque des revendications 1 à 9 dans l'extrudeuse d'alimentation d'une machine de moulage par injection,
(ii) fusion des constituants de la composition par introduction d'énergie thermique et/ou de cisaillement mécanique,
(iii) acheminement de la masse fondue vers le point de sortie de l'extrudeuse,
(iv) décharge de la masse fondue hors de l'extrudeuse, dans un moule à injection,
(v) refroidissement et solidification de la masse fondue dans le moule à injection, avec formation d'un corps moulé,
(vi) prélèvement du corps moulé hors du moule à injection.
